# EUROPEAN PATENT SPECIFICATION

(11) **EP 3 943 232 B1**
(45) Date of publication and mention of the grant of the patent: **25.06.2025**
(21) Application number: 21184656.3
(22) Date of filing: 09.07.2021
(51) Int. Cl.: B23Q 1/03

(54) **METHOD FOR CARRYING AND POSITIONING A PLURALITY OF SUPPORT ELEMENTS ON A WORKING TABLE**
VERFAHREN ZUM TRAGEN UND POSITIONIEREN MEHRERER STÜTZELEMENTE AUF EINEM ARBEITSTISCH
PROCÉDÉ POUR LE TRANSPORT ET LE POSITIONNEMENT D'UNE PLURALITÉ D'ÉLÉMENTS DE SUPPORT SUR UNE TABLE DE TRAVAIL

(30) Priority: 20.07.2020 IT 202000017566
(43) Date of publication of application: 26.01.2022
(73) Proprietor: SCM Group S.p.A., 47921 Rimini (RN) (IT)
(72) Inventor: BERTUCCIOLI, Alessandro, 47921 Rimini (IT)
(74) Representative: Tiburzi, Andrea

(56) References cited:
- DE-A1- 10 109 212
- DE-A1- 102010 053 657
- DE-B3- 102009 017 856

## Description

The present invention relates to a method for carrying and positioning a plurality of support elements on a working table.

The term working table means a working table used in a workpiece machining center (in which said pieces can be panels made of wood or other material) comprising a plurality of bars to support said workpieces.

For such reason, said working table is called a "bar working table".

In general, said working table is supported by a basement and said bars are parallel to each other, and movable along said basement.

Said working table is mainly used for passing machining (i.e. cutting a panel into parts or drilling through holes on the panel and subsequently machining the edge of the panel).

The term support element means a support element that can support a positioning and blocking device for positioning and blocking a workpiece on said working table, or a clamping device for clamping a workpiece on said working table.

In particular, one or more support and blocking devices and/or one or more clamping elements can be positioned on each bar of the bar working table by means of respective support elements.

### Field of the invention

In particular, the invention relates to a method conceived to carry a row of support elements (comprising at least two support elements) on a bar of said bar working table by means of a single slider, movable along said bar, and to position each support element by means of said slider.

### Prior art

As is known, one or more positioning and blocking devices and/or one or more clamping elements can be positioned on a bar working table by means of respective support elements.

One or more support elements are positioned along a bar of the bar working table by means of the presence of a slider.

The slider is movable along the bar and is equipped with a hooking element for being hooked to a support element, so that said support element is carried along said bar when said slider is hooked to said support element.

The position of each support element along the bar is predetermined since, before the machining of one or more pieces, it is necessary to position said one or more positioning and blocking devices and/or one or more clamping elements.

The slider is controlled by a control unit so that each support element occupies a respective predetermined position.

Currently, a method that allows to position one support element at a time by means of a slider is known (see for example DE 10 2010 053657 A1).

From time to time, the slider hooks a support element and moves it along a bar until said support element occupies the required position.

A disadvantage of such a method is given by the fact that it is not possible to move a plurality of support elements by means of a single slider.

### Aim of the invention

The aim of the invention is to overcome said disadvantage, providing a method for carrying and positioning a plurality of support elements on a working table by means of a single slider movable along a bar of said working table, avoiding that each support element needs a respective slider to be positioned on the working table.

Further aim of the invention is to provide a method capable of speeding up the positioning of a plurality of support elements by means of a single slider.

Advantageously, by means of a single slider, it is possible to carry a row of support elements and position, from time to time, a support element belonging to said row of support elements, regardless of the position of said support element in said row of support elements.

### Object of the invention

It is, therefore, specific object of the present invention a method for carrying a plurality of support elements arranged on a bar of a bar working table and for positioning each support element along said bar, said method comprising the following steps:
A) providing a slider movable along a guide element connected to said bar, wherein said slider comprises a body provided with a hooking element to be hooked/unhooked to/from a support element of said plurality of support elements, wherein said hooking element is movable between a rest position, in which said hooking element is unhooked from said support element, and an operating position, in which said hooking element is hooked to said support element,
B) moving along said guide element the slider to position said slider in correspondence with a first support element,
C) when said slider is arranged in correspondence with said first support element, hooking said first support element by said slider,
D) moving along said guide element said slider to which said first support element is hooked to form a row of support elements arranged in succession to each other, wherein said row of support elements comprises at least a second support element arranged in succession to said first support element,
E) carrying said row of support elements along said bar up to a predetermined position, wherein said predetermined position is the desired position of a support element of said row of support elements.

In a first alternative, said predetermined position corresponds to a first desired position for said first support element, and when said first support element is positioned in said first desired position, said method comprises the following steps:
F1) unhooking the first support element from said slider,
G1) moving along said guide element said slider to position said slider in correspondence with said second support element,
H1) when said slider is arranged in correspondence with said second support element, hooking said second support element by said slider,
11) moving along said guide element said slider until said second support element is positioned along said bar in a second desired position for said second support element.

In a second alternative, said predetermined position corresponds to a second desired position for said second support element, and when said second support element is positioned in said second desired position, said method comprises the following steps:
F2) moving along said guide element said slider until said first support element is positioned along said bar in a first desired position for said first support element.

In particular, step D may comprise the substep of moving said slider until said second support element contacts a third support element and so on in such a way that said row of support elements comprises a number N of support elements arranged in succession, and step E may comprise the substep of carrying said row of support elements along said bar up to a predetermined position, wherein said predetermined position is a desired position for one of said N support elements.

With reference to the guide element, said guide element may be connected to a portion of said bar, preferably a side portion.

With reference to the slider, said slider may be connected to a drive belt and said drive belt is connected to a motor, so that the movement imparted by said motor to said drive belt is transmitted to said slider by means of said drive belt.

Further, in said rest position, said hooking element may be retracted inside the body of said slider, and in said operating position, said hooking element may have a portion protruding with respect to said body to be hooked to a support element.

Advantageously, said slider may be provided with detection means for detecting the presence of a support element when said slider is positioned in correspondence with said support element.

Said detection means may comprise an optical proximity sensor or an inductive proximity sensor or a magnetic proximity sensor or a capacitive proximity sensor or an ultrasonic proximity sensor or a radar.

Further, said slider may be provided with identification means for identifying the support element in correspondence with which said slider is positioned.

Said identification means may comprise an RFID reader arranged on said slider and a transponder arranged on each support element, or a reader arranged on said slider and a QR code arranged on each support element.

### List of figures

The present invention will be now described, for illustrative but not limitative purposes, according to its preferred embodiments, with particular reference to the figures of the enclosed drawings, wherein:

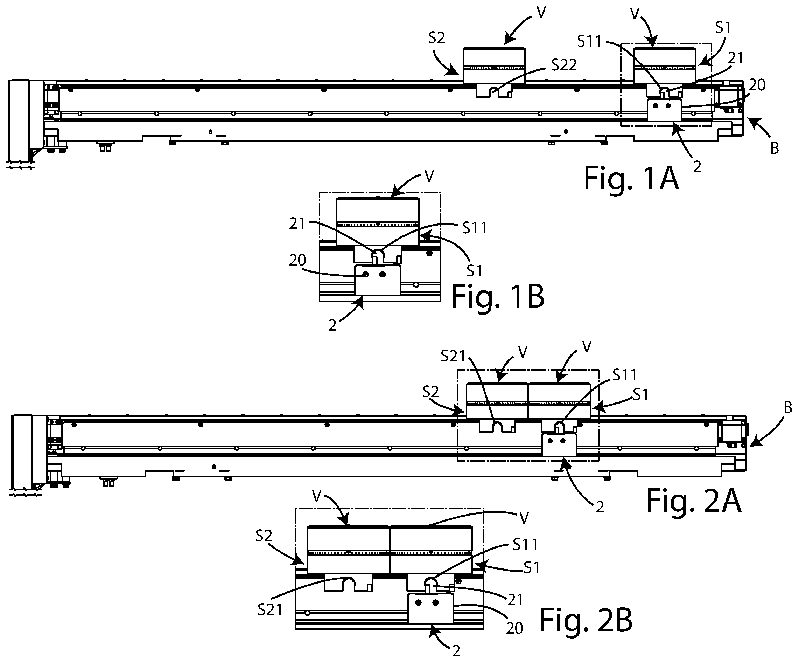

figure 1A shows a first support element and a second support element arranged on a bar of a bar working table, in which said first support element and said second support element are spaced along said bar, and a movable slider is hooked to said first support element;
figure 1B shows a detail concerning the first support element and the slider, which is hooked to said first support element;
figure 2A shows the first support element, which has been carried along with the bar by said slider until contacts said second support element, in which said slider is hooked to said first support element;
figure 2B shows a detail concerning the first support element and the second support element, in contact with each other, in which the slider is hooked to the first support element;

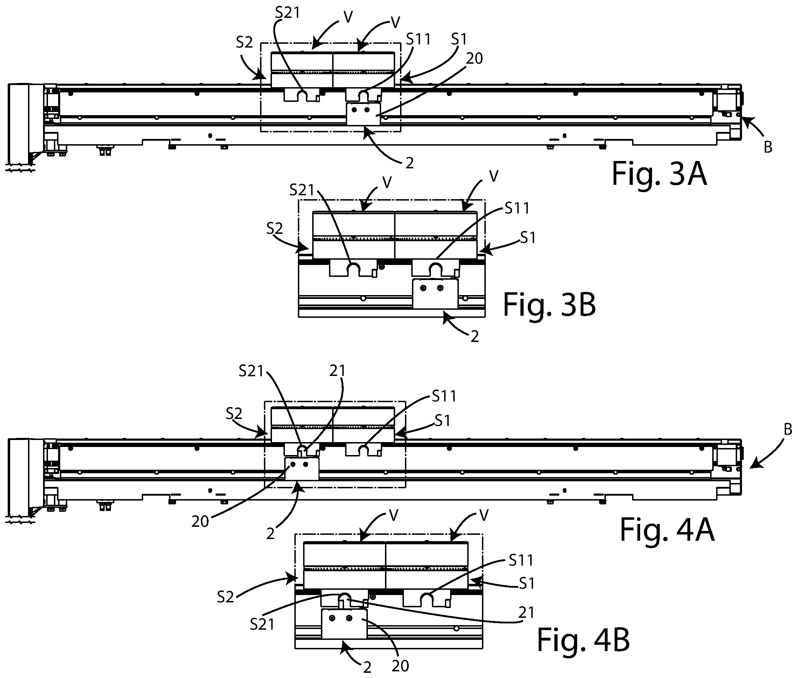

figure 3A shows the first support element in contact with said second support element, wherein said support elements form a row of support elements that has been carried along the bar, and said slider is unhooked from said first support element;
figure 3B shows a detail concerning the first support element and the second support element in contact with each other, wherein the slider is unhooked from the first support element;
figure 4A shows the first support element in contact with said second support element, wherein said slider is hooked to said second support element;
figure 4B shows a detail concerning the first support element and the second support element in contact with each other, wherein the slider is hooked to the second support element;

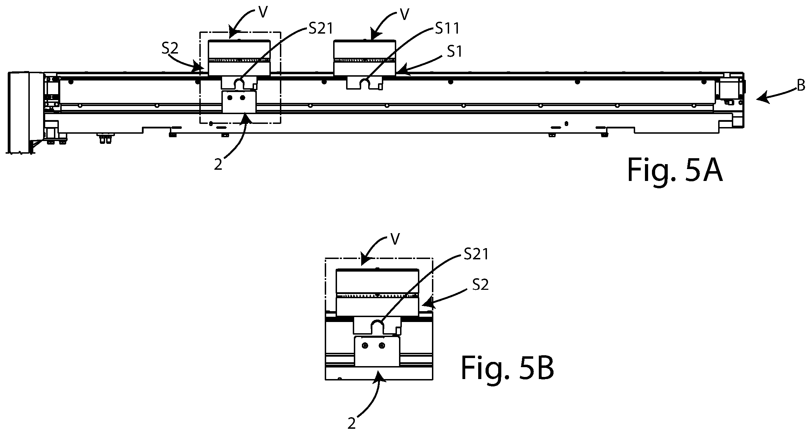

figure 5A shows the second support element which has been carried by the slider and therefore is distant from the first support element, wherein said slider is unhooked from said second support element;
figure 5B shows a detail concerning the second support element and the slider, in which said slider is unhooked from the second support element;
figure 6 shows a guide element, on which the slider moves, wherein said guide element is arranged on a side portion of said bar;
figure 7 shows a drive belt by means of which a motor (controlled by a logic control unit) transmits the movement to the slider for positioning said slider in correspondence with a support element;
figure 8 shows the drive belt in detail.

In the various figures, similar parts will be indicated with the same numerical references.

### Detailed description of the invention

With reference to the figures, it is described a method for carrying a plurality of support elements, arranged on a bar B of a bar working table, and positioning each support element along said bar B in a respective predetermined position, corresponding to a desired position for each support element, in which said position is determined on the basis of the dimensions of the workpiece (such as for example a panel made of wood or another material) and/or of the type of machining.

In fact, the bar working table is used for working one or more pieces P, in particular panels made of wood or another material.

In the embodiment that is described, it will be made reference to a bar working table, of which only one bar B is visible.

On said bar two support elements are arranged, i.e. a first support element S1 and a second support element S2.

A slider 2 is movable along a guide element G for carrying or dragging said first support element S1 and said second support element S2, and positioning each of said support elements along said bar B in a respective predetermined position (i.e. in a respective desired position).

**The slider** 2 comprises a body 20 provided with a hooking element 21 to be hooked/unhooked to/from a support element S1, S2.

In particular, the slider 2 is movable between a rest position, in which said hooking element 21 is unhooked from a support element S1, S2, and an operating position, in which said hooking element 21 is hooked to a support element S1, S2.

More specifically, in the rest position, the hooking element 21 is retracted inside the body 20, and in the operating position, the hooking element 21 has a protruding portion with respect to the body 20 to be hooked to a support element S1, S2.

Each support element S1, S2 is provided with a respective recess S11, S21 to allow the hooking by the slider 2, through said hooking element 21.

Each recess S11, S21 is shaped to allow at least the partial insertion of said hooking element 21.

As explained below, a motor (not shown) transmits the movement to the slider 2 through a drive belt C.

A control logic (not shown) is connected to the motor and to the slider 2 and configured to
∘ operate said motor so that the slider 2 slides along with the guide element G (by means of the movement of the drive belt C) and positions itself in a predetermined position along said guide element G so as to be positioned in correspondence with a support element (i.e. beneath said support element),
o lift the hooking element 21, when the slider 2 is in position (i.e. beneath said support element), so that said slider 2 is hooked to said support element,
o move said slider 2, which said support element is hooked to, along with said guide element G so that said support element (moving along bar B) forms a row of support elements (composed of a plurality of support elements), and stops the movement of said support element in a desired position along the bar B associated **with it** or with a further support element of said row of support elements,
o lower said hooking element 21, when the support element is in position (i.e. in the desired position), so that said slider 2 is unhooked from said support element and ready to be positioned in correspondence with a further hooking element, hook said further support element and carry the latter to the desired position.

When the slider 2 is positioned in correspondence with a support element, said slider 2 is positioned in such a way that said support element is overlapped or substantially overlapped on said slider 2.

In particular, when the slider 2 is positioned in correspondence with said first support element S1, said slider 2 hooks said first support element S1 and carries said first support element S1 along the bar B until said first support element contacts a second support element S2, so that said two support elements (in contact with each other) form a row of support elements, in which the second support element S2 is arranged in succession to the first support element S1.

The number of support elements part of the row of support elements can increase if further support elements are arranged on the bar B and the slider 2 continues to slide on the guide element G.

For example, if further support elements were arranged on the bar B and the slider 2 continued to slide along the guide element G, the second support element S2 could contact a third support element, and said third support element could contact a fourth support element and so on, based on the number of support elements arranged on the bar B, so that also the number of support elements belonging to the row of support elements increases proportionally.

Consequently, by means of a single slider 2, it is possible to position along the bar B one support element at a time, regardless of its position in the row of support elements that can be composed of any number of support elements.

In particular, it is possible to position on the bar B any of the support elements of the row of supporting elements first, regardless of its position in said row of support elements.

For the sake of brevity in the embodiment that is described, two support elements S1, S2 are arranged on the bar B.

Consequently, the method object of the invention provides that the slider 2 hooks a first support element S1, slides along the bar B, so that said first support element S1 contacts a second support element S2, and a row of support elements composed of said two support elements S1, S2 is formed, and said row of support elements is carried along said bar B up to or said first support element S1 is positioned in a predetermined position with respect to said bar B (in which said predetermined position is a first desired position for said first support element S1), or said second support element S2 is positioned in a predetermined position with respect to said bar B (in which said predetermined position is a second desired position for said second support element S2 ).

When the first support element S1 has been positioned on the bar, the slider 2 slides along with the guide element G until it is positioned in correspondence with the second support element S2, and hooks said second support element S2 for carrying it to a second desired position, associated with said second support element S2.

When the second support element S2 has been positioned on the bar, the slider 2 slides along with the guide element G until it is positioned in correspondence with the first support element S1, and hooks said first support element S1 for carrying it to a first desired position, associated with said first support element S1.

In particular, this method comprises the following steps:
A) providing a slider 2 movable along with a guide element G, in which said slider 2 comprises a body 20 provided with a hooking element 21 for hooking a (single) support element S1, S2, where said hooking element 21 is movable between a rest position, in which said hooking element 21 is unhooked from said support element, and an operating position, in which said hooking element 21 is hooked to said support element,
B) moving the slider 2 along said guide element G, for positioning said slider 2 in correspondence with a first support element S1,
C) when said slider 2 is arranged in correspondence with said first support element S1, hooking said first support element S1 by said slider 2,
D) moving along said guide element G said slider 2 hooked to said first support element S1 for forming a row of support elements (i.e. so that on the bar B is formed a row of support elements, due to the movement of the first support element hooked to the slider), arranged in succession to each other, in which said row of support elements comprises at least a second support element S2, arranged in succession to said first support element S1,
E) carrying said row of support elements along said bar B up to a predetermined position, in which said predetermined position is the desired position of one (any) support element of said support row.

In particular, said predetermined position can correspond to a first desired position for said first support element S1, and when said first support element S1 is positioned in said first desired position, said method can comprise the following steps:
F1) unhooking the first support element S1 from said slider 2,
G1) moving said slider 2 along said guide element G to position said slider 2 in correspondence with said second support element S2,
H1) when said slider 2 is arranged in correspondence with said second support element S2, hooking said second support element S2 by said slider 2,
11) moving said slider 2 along with said guide element G until said second support element S2 is positioned along said bar B in a second desired position for said second support element S2 (different from the first desired position for the first support S1).

Alternatively, said predetermined position can correspond to a second desired position for said second support element S2, and when said second support element S2 is positioned in said second desired position, said method comprises the following step:
F2) moving said slider 2 along said guide element G until said first support element S1 is positioned along said bar B in a first desired position for said first support element S1 (different from the second desired position for said second support element support S2).

In such an alternative, after the step F2, the method can comprise a step G2, in which the first support element S1 is unhooked from said slider 2.

With reference to the guide element G, said guide element G is connected to a side portion of said bar B.

Although not shown in the figures, said guide element G can be connected to any portion of said bar B, different from said side portion.

However, as already said, although not shown in the figures, the row of support elements carried along the bar B by the slider 2 can be composed by any number of support elements (i.e. a number greater than two) and by means of a single slider 2 it is possible to position a support element at a time along the bar B first, regardless of its position in the row of support elements.

In general, the step D can comprise the substep of moving said slider 2 until said second support element contacts a third support element, and so on (i.e. said third support element contacts a fourth support element and said fourth support element support contacts a fifth support element, etc.), in such a way that said row of support elements comprises a number *N* of support elements arranged in succession, and the step E can comprise the substep of carrying said row of support elements along said bar B up to a predetermined position, in which said predetermined position is a desired position for any one of said N support elements.

Just to make an example referring to the presence of three support elements, the step D of the method can comprise the substep of moving said slider 2 until said second support element S2 contacts a third support element, in such a way that said row of support elements comprises said third support element and said third support element is arranged in succession to said second support element S2.

Furthermore, the step E of the method can comprise the substep of carrying said row of support elements along said bar B up to a predetermined position, wherein said predetermined position is a predetermined first desired position for said first support element S1, or a predetermined second desired position for said second support element S2, or a predetermined third desired position for said third support element.

With reference to the slider 2, said slider can be provided with detection means for detecting the presence of a support element when said slider 2 is positioned in correspondence with said support element (i.e. when the slider 2 is positioned in such a way that the support element is overlapped or substantially overlapped thereto).

Said detection means can comprise an optical proximity sensor, or an inductive proximity sensor, or a magnetic proximity sensor, or a capacitive proximity sensor, or an ultrasonic proximity sensor, or a radar.

Furthermore, said slider 2 can be provided with identification means for identifying the support element in correspondence with which said slider 2 is positioned.

This allows knowing if the slider 2 is positioned in correspondence with the desired support element.

In other words, it is possible to know if the position of the slider is correct with respect to the support element to be hooked.

In a variant, said identification means can comprise a RFID reader arranged on said slider 2, and a transponder arranged on each support element.

In a second variant, said identification means can comprise a reader arranged on said slider 2 and a QR code arranged on each support element.

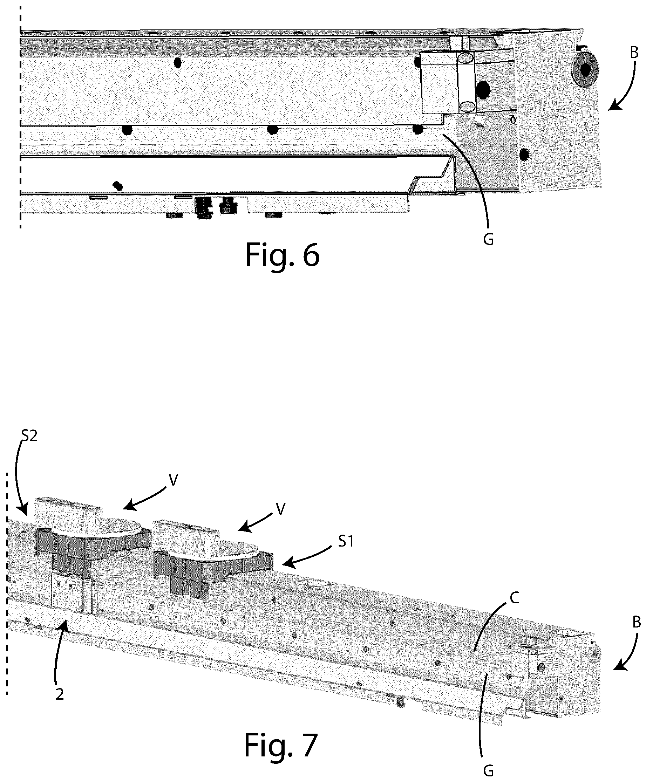

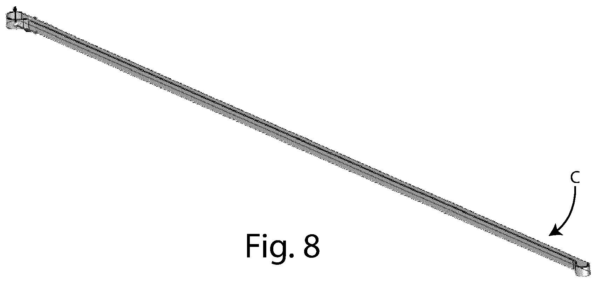

With reference to the figures 6 - 8, and in particular to figures 7 and 8, the figures show the guide element G, on which said slider 2 slides and the drive belt C, by means of which a motion is transmitted to said slider 2 by means of a motor (not shown), in particular an electric motor.

Consequently, when the drive belt C is moved by said motor, the slider 2 slides on said guide element G, until a predetermined position along said guide element G. corresponding to a desired position.

However, it is not necessary that the motion to the slider 2 is imparted by means of a drive belt C.

For example, the motion to the slider 2 can be imparted through any motion transmission system, such as, for example, a pinion-rack type transmission system, without departing from the scope of the invention.

### Advantages

A first advantage of the method object of the present invention is due to the fact that by means of a single slider it is possible to carry a row of support elements along a bar of a bar working table and position each support element of said row of support elements along said bar, regardless of the position of the support element inside the row of support elements.

## Claims

1. Method for carrying a plurality of support elements (S1,S2) arranged on a bar (B) of a bar working table and for positioning each support element (S1, S2) along said bar (B), said method comprising the following steps:
A) providing a slider (2) movable along a guide element (G) connected to said bar (B), wherein said slider (2) comprises a body (20) provided with a hooking element (21) to be hooked/unhooked to/from a support element (S1, S2) of said plurality of support elements (S1,S2), wherein said hooking element (21) is movable between a rest position, in which said hooking element (21) is unhooked from said support element (S1,S2), and an operating position, in which said hooking element (21) is hooked to said support element (S1,S2),
B) moving along said guide element (G) the slider (2) to position said slider (2) in correspondence with a first support element (S1),
C) when said slider (2) is arranged in correspondence with said first support element (S1), hooking said first support element (S1) by said slider (2),
said method being **characterized in that** it comprises the following steps:
D) moving along said guide element (G) said slider (2) to which said first support element (S1) is hooked to form a row of support elements arranged in succession to each other, wherein said row of support elements comprises at least a second support element (S2) arranged in succession to said first support element (S1),
E) carrying said row of support elements along said bar (B) up to a predetermined position, wherein said predetermined position is the desired position of a support element of said row of support elements.

2. Method according to claim 1, **characterized in that** said predetermined position corresponds to a first desired position for said first support element (S1), and **in that** when said first support element (S1) is positioned in said first desired position, said method comprises the following steps:
F1) unhooking the first support element (S1) from said slider (2),
G1) moving along said guide element (G) said slider (2) to position said slider (2) in correspondence with said second support element (S2),
H1) when said slider (2) is arranged in correspondence with said second support element (S2), hooking said second support element (S2) by said slider (2),
I1) moving along said guide element (G) said slider (2) until said second support element (S2) is positioned along said bar (B) in a second desired position for said second support element (S2).

3. Method according to claim 1, **characterized in that** said predetermined position corresponds to a second desired position for said second support element (S2), and **in that** when said second support element (S2) is positioned in said second desired position, said method comprises the following steps:
F2) moving along said guide element (G) said slider (2) until said first support element (S1) is positioned along said bar (B) in a first desired position for said first support element (S1).

4. Method according to claim 1, **characterized in that**
step D comprises the substep of moving said slider (2) until said second support element (S2) contacts a third support element and so on in such a way that said row of support elements comprises a number N of support elements arranged in succession, and
step E comprises the substep of carrying said row of support elements along said bar (B) up to a predetermined position, wherein said predetermined position is a desired position for one of said N support elements.

5. Method according to any one of the previous claims, **characterized in that** said guide element (G) is connected to a portion of said bar (B), preferably a side portion.

6. Method according to any one of the previous claims, **characterized in that** said slider (2) is connected to a drive belt (C) and said drive belt (C) is connected to a motor, so that the movement imparted by said motor to said drive belt (C) is transmitted to said slider (2) by means of said drive belt (C).

7. Method according to any one of the previous claims, **characterized in that** in said rest position, said hooking element (21) is retracted inside the body (20) of said slider (2), and in said operating position, said hooking element (21) has a portion protruding with respect to said body (20) to be hooked to a support element (S1,S2).

8. Method according to any one of the previous claims, **characterized in that** said slider (2) is provided with detection means for detecting the presence of a support element (S1, S2), when said slider (2) is positioned in correspondence with said support element (S1, S2).

9. Method according to the previous claim, **characterized in that** said detection means comprise an optical proximity sensor or an inductive proximity sensor or a magnetic proximity sensor or a capacitive proximity sensor or an ultrasonic proximity sensor or a radar.

10. Method according to any of the previous claims, **characterized in that** said slider (2) is provided with identification means for identifying the support element (S1, S2) in correspondence with which said slider (2) is positioned.

11. Method according to the previous claim, **characterized in that** said identification means comprise an RFID reader arranged on said slider (2) and a transponder arranged on each support element (S1, S2), or a reader arranged on said slider (2) and a QR code arranged on each support element (S1, S2).

## Patentansprüche

1. Verfahren zum Tragen einer Vielzahl von Trägerelementen (S1,S2), die auf einer Stange (B) eines Stangenbearbeitungstisches angeordnet sind, und zum Positionieren jedes Trägerelements (S1, S2) entlang der Stange (B), wobei das Verfahren folgende Schritte umfasst:
A) Bereitstellen eines Schiebers (2), der entlang eines mit der Stange (B) verbundenen Führungselements (G) beweglich ist, wobei der Schieber (2) einen Körper (20) umfasst, der mit einem Hakenelement (21) versehen ist, das an ein/von einem Trägerelement (S1, S2) der mehreren Trägerelemente (S1,S2) einzuhaken/auszuhaken ist, wobei das Hakenelement (21) zwischen einer Ruheposition, in der das Hakenelement (21) von dem Trägerelement (S1,S2) ausgehakt ist, und einer Betriebsposition, in der das Hakenelement (21) an dem Trägerelement (S1,S2) eingehakt ist, bewegbar ist,
B) Bewegen des Schiebers (2) entlang des Führungselements (G), um den Schieber (2) in Übereinstimmung mit einem ersten Stützelement (S1) zu positionieren,
C) wenn der Schieber (2) in Übereinstimmung mit dem ersten Stützelement (S1) angeordnet ist, Einhaken des ersten Stützelements (S1) durch den Schieber (2), dieses Verfahren ist **dadurch gekennzeichnet, dass** es die folgenden Schritte umfasst:
D) Bewegen des Schiebers (2), an dem das erste Stützelement (S1) eingehakt ist, entlang des Führungselements (G), um eine Reihe von Stützelementen zu bilden, die aufeinanderfolgend angeordnet sind, wobei die Reihe von Stützelementen mindestens ein zweites Stützelement (S2) umfasst, das auf das erste Stützelement (S1) folgt,
E) Tragen der Reihe von Stützelementen entlang der Stange (B) bis zu einer vorgegebenen Position, wobei die vorgegebene Position die gewünschte Position eines Stützelements der Reihe von Stützelementen ist.

2. Verfahren nach Anspruch 1, **dadurch gekennzeichnet, dass** die vorbestimmte Position einer ersten gewünschten Position für das erste Stützelement (S1) entspricht, und dass, wenn das erste Stützelement (S1) in der ersten gewünschten Position positioniert ist, umfasst das Verfahren die folgenden Schritte:
F1) Aushaken des ersten Stützelements (S1) aus dem Schieber (2),
G1) den Schieber (2) entlang des Führungselements (G) bewegt, um den Schieber (2) in Übereinstimmung mit dem zweiten Stützelement (S2) zu positionieren,
H1), wenn der Schieber (2) in Übereinstimmung mit dem zweiten Stützelement (S2) angeordnet ist, Einhaken des zweiten Stützelements (S2) durch den Schieber (2),
I1) Bewegen des Schiebers (2) entlang des Führungselements (G), bis das zweite Stützelement (S2) entlang der Stange (B) in einer zweiten gewünschten Position für das zweite Stützelement (S2) positioniert ist.

3. Verfahren nach Anspruch 1, **dadurch gekennzeichnet, dass** die vorbestimmte Position einer zweiten gewünschten Position für das zweite Stützelement (S2) entspricht, und dass, wenn das zweite Stützelement (S2) in der zweiten gewünschten Position positioniert ist, das Verfahren die folgenden Schritte umfasst:
F2) Bewegen des Schiebers (2) entlang des Führungselements (G), bis das erste Stützelement (S1) entlang der Stange (B) in einer ersten gewünschten Position für das erste Stützelement (S1) positioniert ist.

4. Verfahren nach Anspruch 1, **dadurch gekennzeichnet, dass** Schritt D den Teilschritt des Bewegens des Schiebers (2) umfasst, bis das zweite Stützelement (S2) ein drittes Stützelement berührt und so weiter, so dass die Reihe von Stützelementen eine Anzahl N von aufeinanderfolgend angeordneten Stützelementen umfasst, und Schritt E umfasst den Teilschritt des Tragens der Reihe von Stützelementen entlang der Stange (B) bis zu einer vorbestimmten Position, wobei die vorbestimmte Position eine gewünschte Position für eines der N Stützelemente ist.

5. Verfahren nach einem der vorhergehenden Ansprüche, **dadurch gekennzeichnet, dass** das Führungselement (G) mit einem Abschnitt der Stange (B), vorzugsweise einem Seitenabschnitt, verbunden ist.

6. Verfahren nach einem der vorhergehenden Ansprüche, **dadurch gekennzeichnet, dass** der Läufer (2) mit einem Antriebsriemen (C) verbunden ist und der Antriebsriemen (C) mit einem Motor verbunden ist, so dass die vom Motor auf den Antriebsriemen (C) ausgeübte Bewegung mittels des Antriebsriemens (C) auf den Läufer (2) übertragen wird.

7. Verfahren nach einem der vorhergehenden Ansprüche, **dadurch gekennzeichnet, dass** in der Ruheposition das Hakenelement (21) in den Körper (20) des Schiebers (2) zurückgezogen ist und in der Betriebsposition das Hakenelement (21) einen Abschnitt aufweist, der in Bezug auf den Körper (20) hervorsteht, um an einem Stützelement (S1,S2) eingehakt zu werden.

8. Verfahren nach einem der vorhergehenden Ansprüche, **dadurch gekennzeichnet, dass** der Schieber (2) mit Erfassungsmitteln zum Erfassen des Vorhandenseins eines Stützelements (S1, S2) versehen ist, wenn der Schieber (2) in Übereinstimmung mit dem Stützelement (S1, S2) positioniert ist.

9. Verfahren nach dem vorhergehenden Anspruch, **dadurch gekennzeichnet, dass** die Detektionsmittel einen optischen Näherungssensor oder einen induktiven Näherungssensor oder einen magnetischen Näherungssensor oder einen kapazitiven Näherungssensor oder einen Ultraschallnäherungssensor oder ein Radar umfassen.

10. Verfahren nach einem der vorhergehenden Ansprüche, **dadurch gekennzeichnet, dass** der Schieber (2) mit Identifizierungsmitteln versehen ist, um das Trägerelement (S1, S2) zu identifizieren, in dessen Nähe der Schieber (2) positioniert ist.

11. Verfahren nach dem vorhergehenden Anspruch, **dadurch gekennzeichnet, dass** die Identifikationsmittel ein RFID-Lesegerät, das an dem Schieber (2) angeordnet ist, und einen Transponder, der an jedem Trägerelement (S1, S2) angeordnet ist, oder ein Lesegerät, das an dem Schieber (2) angeordnet ist, und einen QR-Code, der an jedem Trägerelement (S1, S2) angeordnet ist, umfassen.

## Revendications

1. Procédé de transport d'une pluralité d'éléments de support (S1,S2) disposés sur une barre (B) d'une table de travail à la barre et pour positionner chaque élément de support (S1, S2) le long de ladite barre (B), ledit procédé comprenant les étapes suivantes:
A) fournir un coulisseau (2) mobile le long d'un élément de guidage (G) relié à ladite barre (B), dans lequel ledit coulisseau (2) comprend un corps (20) pourvu d'un élément d'accrochage (21) à accrocher/décrocher à un élément de support (S1, S2) de ladite pluralité d'éléments de support (S1,S2), dans lequel ledit élément d'accrochage (21) est mobile entre une position de repos, dans laquelle ledit élément d'accrochage (21) est décroché dudit élément de support (S1,S2), et une position de fonctionnement, dans laquelle ledit élément d'accrochage (21) est accroché audit élément de support (S1,S2),
B) déplacer le long dudit élément de guidage (G) le coulisseau (2) pour positionner ledit coulisseau (2) en correspondance avec un premier élément de support (S1),
C) lorsque ledit coulisseau (2) est disposé en correspondance avec ledit premier élément de support (S1), accrocher ledit premier élément de support (S1) par ledit coulisseau (2), cette méthode est **caractérisée en ce qu'**elle comprend les étapes suivantes:
D) déplacer le long dudit élément de guidage (G) ledit curseur (2) auquel ledit premier élément de support (S1) est accroché pour former une rangée d'éléments de support disposés les uns à la suite des autres, dans laquelle ladite rangée d'éléments de support comprend au moins un deuxième élément de support (S2) disposé à la suite dudit premier élément de support (S1),
E) transporter ladite rangée d'éléments de support le long de ladite barre (B) jusqu'à une position prédéterminée, ladite position prédéterminée étant la position souhaitée d'un élément de support de ladite rangée d'éléments de support.

2. Procédé selon la revendication 1, **caractérisé en ce que** ladite position prédéterminée correspond à une première position souhaitée pour ledit premier élément de support (S1), et **en ce que** lorsque ledit premier élément de support (S1) est positionné dans ladite première position souhaitée, ladite méthode comprend les étapes suivantes:
F1) décrocher le premier élément de support (S1) de ladite glissière (2),
G1) déplacer le long dudit élément de guidage (G) ledit coulisseau (2) pour positionner ledit coulisseau (2) en correspondance avec ledit second élément de support (S2),
H1) lorsque ledit coulisseau (2) est disposé en correspondance avec ledit second élément de support (S2), accrocher ledit second élément de support (S2) par ledit coulisseau (2),
I1) déplacer le long dudit élément de guidage (G) ledit curseur (2) jusqu'à ce que ledit second élément de support (S2) soit positionné le long de ladite barre (B) dans une seconde position souhaitée pour ledit second élément de support (S2).

3. Procédé selon la revendication 1, **caractérisé en ce que** ladite position prédéterminée correspond à une seconde position souhaitée pour ledit second élément de support (S2), et **en ce que** lorsque ledit second élément de support (S2) est positionné dans ladite seconde position souhaitée, ledit procédé comprend les étapes suivantes:
F2) déplacer le long dudit élément de guidage (G) ledit curseur (2) jusqu'à ce que ledit premier élément de support (S1) soit positionné le long de ladite barre (B) dans une première position souhaitée pour ledit premier élément de support (S1).

4. Procédé selon la revendication 1, **caractérisé en ce que** l'étape D comprend la sous-étape consistant à déplacer ledit curseur (2) jusqu'à ce que ledit deuxième élément de support (S2) entre en contact avec un troisième élément de support, et ainsi de suite, de manière à ce que ladite rangée d'éléments de support comprenne un nombre N d'éléments de support disposés en succession, et l'étape E comprend la sous-étape consistant à transporter ladite rangée d'éléments de support le long de ladite barre (B) jusqu'à une position prédéterminée, dans laquelle ladite position prédéterminée est une position souhaitée pour l'un des N éléments de support.

5. Procédé selon l'une quelconque des revendications précédentes, **caractérisé par le fait que** l'élément de guidage (G) est relié à une partie de la barre (B), de préférence une partie latérale.

6. Procédé selon l'une quelconque des revendications précédentes, **caractérisé en ce que** ledit coulisseau (2) est relié à une courroie d'entraînement (C) et ladite courroie d'entraînement (C) est reliée à un moteur, de sorte que le mouvement imprimé par ledit moteur à ladite courroie d'entraînement (C) est transmis audit coulisseau (2) au moyen de ladite courroie d'entraînement (C).

7. Procédé selon l'une quelconque des revendications précédentes, **caractérisé en ce que** dans ladite position de repos, ledit élément d'accrochage (21) est rétracté à l'intérieur du corps (20) dudit coulisseau (2), et dans ladite position de fonctionnement, ledit élément d'accrochage (21) présente une partie en saillie par rapport audit corps (20) pour être accroché à un élément de support (S1,S2).

8. Procédé selon l'une quelconque des revendications précédentes, **caractérisé en ce que** ledit coulisseau (2) est muni de moyens de détection pour détecter la présence d'un élément de support (S1, S2), lorsque ledit coulisseau (2) est positionné en correspondance avec ledit élément de support (S1, S2).

9. Procédé selon la revendication =- précédente, **caractérisé en ce que** lesdits moyens de détection comprennent un capteur de proximité optique ou un capteur de proximité inductif ou un capteur de proximité magnétique ou un capteur de proximité capacitif ou un capteur de proximité ultrasonique ou un radar.

10. Procédé selon l'une quelconque des revendications précédentes, **caractérisé en ce que** ledit coulisseau (2) est muni de moyens d'identification permettant d'identifier l'élément de support (S1, S2) en correspondance duquel ledit coulisseau (2) est positionné.

11. Procédé selon la revendication précédente, **caractérisé en ce que** lesdits moyens d'identification comprennent un lecteur RFID disposé sur ledit curseur (2) et un transpondeur disposé sur chaque élément de support (S1, S2), ou un lecteur disposé sur ledit curseur (2) et un code QR disposé sur chaque élément de support (S1, S2).
